# EUROPÄISCHE PATENTSCHRIFT

(11) **EP 3 740 076 B1**
(45) Veröffentlichungstag und Bekanntmachung des Hinweises auf die Patenterteilung: **23.06.2021**
(21) Anmeldenummer: 19701480.6
(22) Anmeldetag: 18.01.2019
(51) Int. Cl.: A21C 13/00, A21C 14/00

(54) **GÄRAPPARAT ZUM GÄREN VON TEIGLINGEN SOWIE VERFAHREN, INSBESONDERE ZUM BETREIBEN EINES SOLCHEN GÄRAPPARATES**
LEAVENING APPARATUS FOR LEAVENING DOUGH PIECES, AND METHOD, IN PARTICULAR FOR OPERATING SUCH A LEAVENING APPARATUS
APPAREIL DE FERMENTATION DESTINÉ À LA FERMENTATION DES MORCEAUX DE PÂTE AINSI QUE PROCÉDÉ, EN PARTICULIER DE FONCTIONNEMENT D'UN TEL APPAREIL DE FERMENTATION

(30) Priorität: 18.01.2018 DE 102018101068
(43) Veröffentlichungstag der Anmeldung: 25.11.2020
(73) Patentinhaber: Reichenbach, Albert, 58675 Hemer (DE); Lösche, Klaus, 27570 Bremerhaven (DE)
(72) Erfinder: Reichenbach, Albert, 58675 Hemer (DE); Lösche, Klaus, 27570 Bremerhaven (DE)
(74) Vertreter: Haverkamp, Jens
(86) Internationale Anmeldenummer: PCT/EP2019/051204
(87) Internationale Veröffentlichungsnummer: WO 2019/141793

(56) Entgegenhaltungen:
- DE-A1-102012 200 304
- DE-U1-202011 051 026
- US-A1- 2008 171 120

## Beschreibung

Die Erfindung betrifft einen Gärapparat zum Gären von Teiglingen sowie ein Verfahren zum Konditionieren des Klimas in der Gärkammer eines Gärapparates zum Gären von in seiner Gärkammer befindlichen Teiglingen.

Gärapparate werden von Bäckereien zum Gären von Teiglingen eingesetzt. Bei derartigen Gärapparaten kann es sich um verfahrbare oder auch um größere, in einem Gebäude fest installierte Apparate und Räume handeln. Dabei lassen sich kontinuierlich arbeitend ausgelegte Gärapparate von nicht kontinuierlich arbeitend ausgelegten Gärapparaten unterscheiden. Ein solcher Gärapparat verfügt über eine Gärkammer, in der die zu gärenden Teiglinge eingebracht werden. Typischerweise befinden sich die Teiglinge auf Gärdielen, wobei in eine solche Gärkammer zahlreiche Bleche mit Teiglingen übereinander angeordnet sind. Bei nicht kontinuierlich arbeitenden Gärapparaten befinden sich mehrere Gärdielen in einer übereinander Anordnung in der Gärkammer. Bei kontinuierlich arbeitenden Gärapparaten werden diese über Fließbänder oder andere Förderer, wie beispielsweise ein Paternoster-System gefördert.

Zu backende Teiglinge müssen in der Regel zuvor gären, damit der Teig seine gewünschten Eigenschaften, wie etwa Lockerung, Konsistenz oder Gärvolumen erhalten. Bei dem Gärprozess entsteht durch die eingesetzte Bäckerhefe gegebenenfalls auch Sauerteigbakterien, die die Gärung vollzieht, unter anderem CO₂. Ein nicht unerheblicher Teil der Gärungsprodukte verbleibt in der Regel im Teig. Ein anderer wird in die Umgebung abgegeben. Besonderen Einfluss auf den Gärprozess hat die Temperatur in der Gärkammer. Eine höhere Temperatur beschleunigt den Gärprozess, während eine niedrigere Temperatur den Gärprozess verlangsamt oder, wenn die Temperatur tief genug ist, diesen insgesamt unterbindet.

Bei modernen Gärapparaten, die beispielsweise als Gärschränke ausgeführt sind, erfolgt die Prozessführung über die Temperatur, mitunter zusätzlich auch über die relative Raumfeuchte. Um die gewünschte Teigqualität zu erreichen, wird die Temperaturführung in einem solchen Gärschrank entsprechend vorgenommen. Die Temperaturführung selbst kann sich in Abhängigkeit von der Backware, die aus den Teiglingen gebacken werden soll, unterscheiden. Die Temperatur wird bei Gärräumen in der Regel konstant eingehalten. Bei Gärsteuerungsverfahren beziehungsweise bei Gärautomaten folgt man in Abhängigkeit von den Eigenschaften des zu gärenden Teiglings und in Abhängigkeit von der oder den Zielgrößen ein bestimmtes Temperaturprofil. Dabei werden verfahrensabhängig üblicherweise Temperaturen zwischen +35°C bis -15°C spezifisch eingehalten. Zielgröße ist typischerweise das uhrzeitliche Ende des Gärprozesses.

Bei Bäckereien, die nicht rund um die Uhr backen und bei denen die Teiglinge nach Beenden des Gärprozesses nicht immer unverzüglich weiterverarbeitet werden können, wird die Temperaturführung des Gärprozesses auf den Zeitpunkt des nächsten Backens eingerichtet. Dieses umfasst den Vorgang der sogenannten Gärunterbrechung oder Gärverzögerung. Bei diesem Vorgang wird die Temperatur in einem Gärautomaten soweit erniedrigt, dass je nach Ausgestaltung des Verfahrens der Gärprozess für eine bestimmte Zeitdauer sehr langsam verläuft oder gänzlich unterbunden wird.

Während des Gärens entsteht unter anderem CO₂ in der Gärkammer, das sich aufgrund seiner Molmasse zunächst im Bodenbereich einschichtet. Dieses kann, wenn es sich bei den Gärkammern um begehbare Gärapparate handelt, problematisch sein, wenn der CO₂-Gehalt darin zu groß, hygienisch und gesundheitlich bedenklich ist, wenn jemand die Gärkammer öffnet, um den Gärgrad zu prüfen oder um aus dieser die gegärten Teiglinge zu entnehmen. In Gärkammern können im Prozessverlauf CO₂-Gehalte der Umgebungsluft von z.B. 3000 bis 7000 ppm oder auch mehr entstehen. Dieses geht einher mit einer entsprechenden Anreicherung der Konzentration anderer Gärprodukte, wie beispielsweise Ethanol, Aromastoffe und dergleichen und eine entsprechende Abreicherung des Sauerstoffgehaltes.

Bei Gärapparaten der in Rede stehenden Art wird für die erforderliche Temperaturführung die Temperatur in der Gärkammer überwacht. Bekannt ist auch, den relativen Wassergehalt in Gärkammern zu überwachen. Bei vorbekannten Gärapparaten wird zur Regulierung des relativen Wassergehaltes in der Gärkammer Wasserdampf in diese eingeleitet. Der Wasserdampf ist heiß. Die Verteilung innerhalb der Gärkammer erfolgt im einfachen Fall durch Konvektion nach oben steigend oder ist zumindest durch diese unterstützt. Auf diese Weise wird auch eine Temperaturanhebung in der Gärkammer vorgenommen. Soll hingegen die Temperatur in der Gärkammer abgesenkt werden, wird in diese Kälte eingeleitet. Auch wenn sich mit derartigen Gärapparaten zufriedene Backergebnisse erzielen lassen, so muss bei kritisch hohen CO₂-Werten auf Dauer mit verstärkten hygienischen Problemen gerechnet werden, die insbesondere ein unerwünschtes Schimmelwachstum betreffen. Daher muss bei diesen Gärapparaten auf die Sauberkeit vor allem bei Nichtbenutzung besonders geachtet werden.

Überdies wäre es wünschenswert, wenn die Qualität der gegärten Teiglinge und der Gärprozess - und damit verbunden die Gebäckqualität - weiter verbessert werden könnte.

DE 196 38 664 A1 offenbart ein Gargerät zum Garen von Lebensmitteln. Bei diesem Gargerät handelt es sich um ein Garbehältnis, welches in einem Backofenmuffel angeordnet ist und mit einem Dampfeingang an einen im Backofenmuffel befindlichen Dampfaustritt angeschlossen ist. Das Gargerät verfügt über einen Dampfaustritt, der oberseitig angeordnet ist. Gegart wird bei diesem Gargerät mittels Heißdampfs. Oberhalb des Dampfaustrittes des Garbehältnisses befindet sich ein Temperatursensors. Anhand der aus dem Garbehältnis austretenden Dampftemperatur wird der Garvorgang gesteuert. Mit dem Heißdampfgarverfahren wird zwischen einer ersten Ankochphase und einer anschließenden Fortkochphase unterschieden.

DE 10 2008 036 683 A1 offenbart ein weiteres Gargerät und ein Verfahren zum Steuern eines Garprozesses. Bei diesem Gargerät handelt es sich um einen Heißluftdämpfer. Bei diesem Gargerät wird über einen den Garraum durchströmenden Luftstrom Einfluss auf den Garprozess genommen, wenn etwa das Gargut mittels Bräunungssensorik gegart werden soll. Ausgangsseitig bezüglich des Garraumes wird die Gaskonzentration bzw. die Gaskonzentrationsänderung während des Garprozesses überwacht, um auf diese Weise einen Rückschluss auf den Fortschritt des Garprozesses des Gargutes zu erhalten.

Bei diesen beiden Gargeräten handelt es sich allerdings nicht um Gärapparate zum fermentativen Gären von Teiglingen, sondern Gargeräte benötigen vergleichsweise hohe Temperaturen (zum Beispiel 90 °C), um bestimmte Lebensmittel verdaulich zu machen, wie beispielsweise Fleisch, Kartoffeln etc.

Aus DE 10 2012 200 304 A1 ist ein Gargerät bekannt, mit dem Lebensmittel zubereitet werden, damit man diese anschließend genießen kann. Dieses vorbekannte Gargerät verfügt über einen Garraum und zumindest einen Sensor zum Erfassen zumindest einer Eigenschaft des Garraumes, wie den Sauerstoffgehalt, den Feuchtigkeitsgehalt und dergleichen. Dieser zumindest eine Sensor ist als Lambdasonde ausgelegt.

DE 20 2011 051 026 U1 offenbart ebenfalls ein Gargerät. Dieses verfügt über absperrbare Entfeuchtungsöffnungen. Auch dieses Gargerät umfasst einen Innenraum. Zusätzlich ist dieses Gargerät mit einer Heizeinrichtung und einer Garraumatmosphärenzirkulationseinrichtung sowie einem Be-und/oder Entlüftungssystem ausgerüstet.

Aus US 2008/0171120 A1 ist ein Teigkonditionierungsapparat für gefrorene Teiglinge bekannt. Genutzt wird dieses vorbekannte Gerät zum Auftauen tiefgefrorener Teiglinge, bevor diese gebacken werden. Dieses Gerät verfügt über einen Konditionierungsgasstrom, der auf die innerhalb des Gerätes befindlichen aufzutauenden Teiglinge gerichtet ist. Während des Auftauprozesses wird die Feuchtigkeit und die Temperatur innerhalb des Gerätes kontrolliert.

Ausgehend von diesem diskutierten, Gärapparate betreffenden Stand der Technik liegt der Erfindung die Aufgabe zu Grunde, einen Gärapparat zum Gären von Teiglingen sowie ein eingangs genanntes Verfahren zum Konditionieren des Klimas in der Gärkammer des Gärapparates vorzuschlagen, mit dem der Gärprozess der Teiglinge verbessert werden kann.

Gelöst wird die auf den Gärapparat bezogene Aufgabe erfindungsgemäß durch einen Gärapparat mit den Merkmalen des Anspruchs 1.

Die verfahrensbezogene Aufgabe wird durch ein eingangs genanntes Verfahren mit den Merkmalen des Anspruchs 7 gelöst.

Der im Rahmen dieser Ausführungen benutzte Begriff der Gärkammer umfasst sämtliche durch Begrenzungen, wie etwa Wände, Abtrennungen und dergleichen eingefasste Räume oder Kammern, in denen Teiglinge zum Gären eingebracht werden. Somit kann es sich hierbei um die Gärkammer eines einfachen Gärapparates, um den Raum eines fest installierten Gärapparates oder auch um denjenigen Raum handeln, in dem in einem Gärvollautomaten die Teiglinge zum Gären eingelegt werden.

Mit diesem Gärapparat wird der Gärprozess der in seiner Gärkammer befindlichen Teiglinge dadurch verbessert und besser kontrolliert, da zum Einstellen des Klimas für den Gärprozess innerhalb der Gärkammer ein Luftstrom durch die Gärkammer geleitet wird. Die Gärkammer verfügt zu diesem Zweck über einen oberen Einlass und einen unteren Auslass, wobei die Auslassöffnung hinsichtlich ihrer Öffnungsweite und damit bezüglich ihrer durchströmbaren Querschnittsfläche einstellbar ist. Zum Einstellen wird man typischerweise einen elektrisch ansteuerbaren Aktor zum Betätigen eines Auslassschiebers oder einer Auslassklappe einsetzen. Über den Luftstrom kann eine Temperierung der Gärkammer beziehungsweise der darin befindlichen Teiglinge vorgenommen werden.

Zugleich dient der Luftstrom bei dem Gärapparat als Transportmedium, mit dem Aerosol zum Einstellen des absoluten Wassergehaltes in der Umgebung der Teiglinge in die Gärkammer eingebracht wird. Vorteilhaft ist bei diesem Konzept gegenüber vorbekannten Gärapparaten, dass für die Temperierung nicht zwei unterschiedliche Medien, wobei eines für eine warme Zufuhr und ein weiteres zum Kühlen erforderlich ist, benötigt werden. Der Vorteil liegt in der Bereitstellung der für den Gärprozess benötigten Umgebungsfeuchtigkeit durch von dem Luftstrom getragenes Wasser-Aerosol. Eine Temperierung erfolgt über die Temperatur des Luftstroms und/oder Aerosols. Durch die Temperierung des Gärraumes mittels des diesen durchströmenden Luftstroms kann die Temperatur in der Umgebung der zu gärenden Teiglinge sehr exakt eingestellt werden. Dadurch wird sichergestellt, dass die maximale Gärtemperatur nicht überschritten wird. Bei Hefe liegt diese bei etwa 40° C. Auch innerhalb der möglichen Gärtemperatur können gewünschte Gärtemperaturen auf diese Weise sehr genau eingehalten werden, beispielsweise höhere Gärtemperaturen von etwa 35 bis 37° C oder niedrige Gärtemperaturen von beispielsweise 20 bis 25°C. Zugleich kann hierdurch Sorge dafür getragen werden, dass die Temperatur der Hefe nicht unter diejenige Temperatur fällt, unter der die Hefe nicht mehr aktiv ist. Dieses ist bei etwa -9° C der Fall. Ähnliches gilt bei einer Verwendung von Sauerteigbakterien.

Der die Gärkammer des Gärapparates durchströmte Luftstrom kann bei einer Nichtbenutzung des Gärapparates zur Trocknung desselben genutzt werden, sodass auf diese Weise der Gefahr einer Schimmelbildung bei Nichtbenutzung vorgebeugt ist. Dann wird dem Luftstrom typischerweise kein Aerosol beigemengt.

Über die Möglichkeit der Zuführung von Wasser-Aerosol in die Gärkammer wird der Feuchtigkeitsgehalt in der Umgebung der gärenden Teiglinge eingestellt. Von Vorteil ist, dass das Aerosol zwar ebenfalls als Wärmeträger genutzt werden kann, dass eine Einstellung der Luftfeuchtigkeit im Unterschied zu der Verwendung von Wasserdampf temperaturunabhängig ist. Das Aerosol kann aus einer beliebig temperierten Flüssigkeit generiert werden.

In einer bevorzugten Ausgestaltung eines solchen Gärapparates durchströmt der Luftstrom die Gärkammer in vertikaler Richtung. Auch wenn man in zahlreichen Anwendungsfällen den Gärapparat ausbildet, damit der Luftstrom in vertikaler Richtung von oben nach unten die Gärkammer durchströmt, was bezüglich des beim Gären entstehenden CO₂ günstig ist, kann ein solcher Luftstrom die Gärkammer auch in der entgegengesetzten Richtung von unten nach oben durchströmen. In Folge des vertikalen Durchströmens der Gärkammer mit dem Luftstrom ist einer klimatischen Schichtbildung der Gärkammer entgegengewirkt. Mitunter kann es auch für einen Gärprozess sinnvoll sein, die Luftströmung während des Gärprozesses in unterschiedlichen Richtungen vorzusehen, beispielsweise wenn gebildetes CO₂, welches bestrebt ist, aufgrund seines spezifischen Gewichtes nach unten abzuseigern, durch einen in entgegengesetzte Richtung strömende Luftstrom auf den in oberen Etagen befindlichen Teiglingen zugeführt werden soll.

Es kann vorgesehen sein, dass der Einlassöffnung des Luftstromes, über die dieser in den Gärapparat eintritt, ein Ventilators oder Ventilatoreinheit zum Erzeugen der gewünschten Luftströmung zugeordnet ist. Die Einlassöffnung befindet sich bei einer vertikalen Luftströmung oberhalb der Gärkammer, während sich der Auslass im unteren Bereich der Gärkammer, typischerweise im Bereich des Bodens derselben befindet. Grundsätzlich kann eine Luftströmung auch dadurch erzeugt werden, dass sich ein Ventilator oder eine Ventilatoreinheit im Bereich des Auslasses und nicht im Bereich der Einlassöffnung befindet. In einer Weiterbildung eines solchen Gärapparates ist vorgesehen, dass ein Ventilator oder eine Ventilatoreinheit sowohl im Bereich der Einlassöffnung als auch im Bereich des Auslasses angeordnet sind, wobei die Begrifflichkeit "Einlassöffnung" und "Auslass" sich auf die Strömungsrichtung des Luftstromes beziehen. Vor allem bei einer Ausgestaltung mit zwei Ventilatoren oder Ventilatoreinheiten, wobei jeweils ein bzw. eine der Einlassöffnung und zumindest ein weiterer bzw. eine weitere dem Auslass zugeordnet sind, kann eine bezüglich ihrer Strömungsrichtung alternierende Luftströmung erzeugt werden. Auch kann beispielsweise durch einen unterschiedlichen Betrieb des Eingangs- und Ausgangsventilators bzw. -ventilatoreinheit bezüglich der Drehzahl ihrer Propeller eine Druckerhöhung in der Gärkammer mit oder ohne Verstellung der Öffnungsweite des Auslasses bewirkt werden. Bei einem solchen Ventilator kann es sich beispielsweise um einen Lüfter handeln. Im Falle einer Ventilatoreinheit sind mehrere Ventilatoren zu einer Ventilatoreinheit zusammengeschaltet, beispielsweise in einer Nebeneinanderanordnung zueinander.

Von Besonderheit bei diesem Gärapparat bzw. dem beschriebenen Verfahren ist, dass der Luftstrom durch die Gärkammer hindurchströmt und dieser grundsätzlich nicht in einem Umluftbetrieb gefördert wird, das heißt: dass der am Auslass ausströmende Luftstrom über die Einlassöffnung wieder in den Gärapparat eintritt. Vielmehr wird über die Einlassöffnung Umgebungsluft von außerhalb des Gärapparates angesaugt. Allerdings kann ein solcher Gärapparat, wenn entsprechend ausgebildet, auch zeitweise in einem Umluftbetrieb betrieben werden, wenn dieses zum Einstellen oder Aufrechterhalten eines vorgegebenen Klimas in der Umgebung der in der Gärkammer befindlichen Teiglinge hierdurch unterstützt werden kann.

Das in die Gärkammer mittels des Luftstroms eingebrachte Aerosol kann mit Zusatzstoffen beladen sein, und zwar je nach gewünschter Anwendung. So besteht die Möglichkeit, das Aerosol als Träger von antimikrobiellen und/oder antifungalen Stoffen genutzt werden, die zum Reinigen des Gärraumes, dann möglicherweise in einer etwas höheren Konzentration, oder auch zum Schutze der gärenden Teiglinge, dann in einer etwas geringeren Konzentration, enthalten sein können. Das Aerosol kann auch genutzt werden, um den Gärprozess selbst positiv zu beeinflussen, beispielsweise wenn das Aerosol beziehungsweise die Aerosoltröpfchen mit Sauerstoff angereichert sind. Mit einer solchen Sauerstoffanreicherung kann der Sauerstoffgehalt in dem direkten Umfeld der Teiglinge erhöht werden. Auf diese Weise kann selbst bei höheren CO₂-Gehalten der für den Gärprozess und die Teigoxidation benötigte Sauerstoffgehalt in der Umgebung der Teiglinge und somit in der Gärkammer für den Gärprozess optimiert werden. Eine ähnliche, aber verstärkte Wirkung hat mit Ascorbinsäure beladenes und O₂₋ imprägniertes beziehungsweise -angereichertes Wasser-Aerosol auf den Gärprozess und damit auf die Teig- und Gebäckqualität insgesamt.

Der Gärapparat verfügt über ein Klimatisierungsmodul mit einer Steuereinrichtung zum Steuern des Gärprozesses und der Teigstabilisierung. Die Steuereinrichtung verfügt über eine Einrichtung zum Erzeugen eines Luftstroms sowie eine Einrichtung zum Erzeugen des von dem Luftstrom getragenen Aerosols. Darüber hinaus sind an die Steuereinrichtung mehrere, klimatische Größen innerhalb der Gärkammer erfassende Sensoren angeschlossen, deren Messdaten die Steuereinrichtung beaufschlagen. Hierbei handelt es sich um jeweils zumindest einen Temperatursensor, einen Feuchtigkeitssensor und einen CO₂₋ und/oder O₂-Sensor. Wesentlich bei diesem Gärapparat und dem erfindungsgemäßen Verfahren ist die Überwachung und Regelung des CO₂- und/oder O₂-IST-Gehaltes in der Gärkammer. In einem Ausführungsbeispiel ist vorgesehen, in unterschiedlichen Höhen der Gärkammer jeweils einen solchen Sensor anzuordnen.

Bei den Untersuchungen, die zu dieser Erfindung geführt haben, hat sich überraschend gezeigt, dass eine Steuerung des Gärprozesses nicht nur über die Temperatur, sondern auch über den CO₂-Gehalt in der Umgebung der Teiglinge gesteuert werden kann und hierdurch insbesondere auch die Qualität der gegärten Teiglinge und die entsprechenden Gebäcke verbessert werden kann. Für den Gärprozess ist ein gewisser CO₂-Gehalt der Umgebung förderlich. Allerdings darf der atmosphärische CO₂-Gehalt auch nicht zu hoch sein. Über den CO₂-Gehalt und die Temperatur lässt sich auch die mit dem Gärprozess verbundene Ethanolbildung kontrollieren. Beim Gärprozess äquimolar zu CO₂ sich bildendes Ethanol verbleibt zum Teil im Teig, andere Anteile gehen in die umgebende Atmosphäre über. Dieses wirkt sich bei kritischen Konzentrationen jedoch negativ auf die Qualität des gegärten Teiglinges und der daraus hergestellten Backware aus. Insofern kann über den Verlauf des Gärprozesses mit diesem Gärapparat und erfindungsgemäßen Verfahren der CO₂-Gehalt kontrolliert werden. Alternativ kann auch ein Sauerstoffsensor eingesetzt werden, da Sauerstoff nötig ist, um den Gärprozess einzuleiten. Die Sauerstoff-Verminderung in der Gärraum-Atmosphäre resultiert primär durch entsprechende Verdünnungs-Effekte als Folge der Anreicherung von Gärgasen (CO₂, Ethanol etc.) im Verlauf eines Gärprozesses und einem gewissen Sauerstoffverbrauch durch oxidative Umsetzungsreaktionen im Teigling. Eine Sauerstoffaufnahme über die Oberfläche der Teiglinge führt offensichtlich zu einer deutlichen Verbesserung der Gäraktivität und zu gärstabileren Teiglingen. In einem Ausführungsbeispiel eines solchen Gärapparates sind sowohl CO₂- als auch O₂-Sensoren verbaut.

Um eine bestimmte Teigqualität der Teiglinge beim Gären zu erreichen, ist ein bestimmter Sauerstoffgehalt beim Gären in der Atmosphäre erforderlich. Diese Anforderung ist gegenläufig zu dem anaeroben Vorgang des Gärens bei dem u.a. CO₂ entsteht. Mit den Möglichkeiten des vorbeschriebenen Gärapparates kann der Gärprozess bezüglich des auf der einen Seite erforderlichen Sauerstoffes und auch des für den Gärprozess erforderlichen CO₂ in besonderer Weise kontrolliert werden.

Sauerstoff wird beim Vorgang des Gärens ebenfalls für die Bildung Aroma wirksamer Stoffe benötigt. Gleichermaßen induziert O₂ die Biosynthese solcher Stoffe, die die Hefe gegenüber Stress-Situation wie Gefrieren und Auftauen, resistenter gestaltet. Zudem kann die Teigrheologie durch einen Sauerstoffmindestgehalt positiv beeinflusst werden, ebenso wie das daraus hergestellte Gebäckvolumen. Weizenteige sind typischerweise oxidativ stabilisiert.

Die Erfassung des CO₂-Gehaltes erhöht gerade bei größeren Gärapparaten, beispielsweise solchen, die zum Einbringen und Ausbringen von Teiglingen zu begehen sind, die Arbeitssicherheit. Ist der CO₂-Gehalt in der Gärkammer zu hoch, kann dies angezeigt werden, sodass die Gärkammer nicht betreten werden darf. Grundsätzlich kann dieses auch mit einer Türverriegelung kombiniert sein, und zwar dergestalt, dass die Tür der Gärkammer sich erst öffnen lässt, wenn der CO₂-Gehalt einen gewissen eingestellten Schwellwert unterschritten hat beziehungsweise diesen nicht überschritten hat. Aufgrund des spezifischen Gewichtes von CO₂ wird man den oder die CO₂-Sensoren im unteren Drittel bezogen auf die Höhe der Gärkammer anordnen. Dieses schließt nicht aus, dass auch ein oder mehrere weitere CO₂-Sensoren im oberen Bereich als Kontrollsensoren vorgesehen sein können.

Die Überwachung des CO₂- bzw. O₂-Gehaltes in der Gärkammer erlaubt nicht nur eine Kontrolle der Teig- und Gebäckqualität durch die auf diese Weise beeinflusste Gärung, sondern zugleich kann die Hemmwirkung eines zu hohen CO₂-Gehaltes in der Umgebung des zu gärenden Lebensmittels auf den Gärprozess vermieden werden, indem darauf geachtet wird, dass der CO₂-Gehalt eine bestimmte Konzentration nicht überschreitet. Die Teigqualität ist durch eine Kontrolle des CO₂-Gehaltes in der Teiglingumgebung dahingehend verbessert, dass diese nicht breitlaufen, so gut wie nicht kleben und eine sich positiv auf das Aroma und den Geschmack auswirkende verstärkte Bräunungsraten aufweisen. Eine Kontrolle des CO₂-Gehaltes kann auch eine Reduzierung von Backmittel zur Folge haben.

Über die Aerosolzuführung gesteuerte Luftfeuchtigkeit in der Gärkammer und den die Gärkammer durchströmenden Luftstrom wird die Hygiene in der Gärkammer beherrschbar. Insbesondere wird hierdurch die Möglichkeit geschaffen, wirksam einer Schimmelbildung vorzubeugen.

Durch die infolge des durchgeleiteten Luftstroms mit diesem mitgeführte Aerosol-Beladung und die damit kontrollierte Luftfeuchtigkeit in der Umgebung der Teiglinge kann eine optimierte Wärmeleitfähigkeit bereitgestellt werden, wodurch eine so genannte Verhautung vermieden werden kann.

Über die CO₂-Konzentration und die zu dieser gegenläufigen O₂-Konzentration kann ebenfalls auf die Bedürfnisse unterschiedlicher, in den Teiglingen eingesetzter Backmittel reagiert werden, um den Gärprozess zu optimieren. Somit bietet es sich an, für einen Teigling mit einem oxidativ wirkenden Backmittel eine andere CO₂- bzw. O₂-Umgebung für den Gärprozess bereitzustellen als bei Teiglingen, die ein nicht oxidatives Backmittel enthalten.

In einer Weiterbildung ist vorgesehen, dass neben den bereits genannten Klimadaten ebenfalls der Druck in der Gärkammer erfasst wird. Über den Luftdruck kann der Wasserdampfpartialdruck aus dem Teigling minimiert werden. Um dieses zu erreichen, wird der Luftdruck in der Gärkammer entsprechend eingestellt. Dieses kann über den die Gärkammer durchströmenden Volumenstrom kontrolliert werden, und zwar sowohl durch die mittels eines Gebläses geförderten Luftmenge als auch über die Einstellung der Öffnungsweite der Auslassöffnung. Über diese Maßnahmen lässt sich auch der Innendruck in der Gärkammer variieren.

Die zum Teil kritischen CO₂- und Ethanol-Werte in Gärkammern von Gärapparaten, etwa Gärautomaten, sowie die entsprechend verminderten Sauerstoffpartialdrücke schaffen Bedingungen, die unter anderem hygienisch bedenklich sind, und zwar da diese optimierte Voraussetzungen für das unerwünschte Wachstum von Mikroorganismen, insbesondere Schimmelpilze sind. Die Aufrechterhaltung von ausreichend hohen O₂-Werten und maximalen CO₂-Werten (einschließlich Ethanol) ist daher auch hygienisch erforderlich und zielführend.

Das Klimatisierungsmodul kann integraler Bestandteil des Gärapparates sein. In einem solchen Fall ist das Klimatisierungsmodul oberhalb der Gärkammer angeordnet. Über eine als Einlassöffnung dienende Luftansaugöffnung wird Umgebungsluft angesaugt, durch das Klimatisierungsmodul gefördert, temperiert und mit der jeweils gewünschten Aerosol-Menge beladen. Die Luftströmung strömt durch die Gärkammer von oben nach unten, um auf diese Weise CO₂ wirksam aus der Gärkammer wegführen zu können, wenn dieses gewünscht wird. Wenn ein gewisser CO₂-Gehalt in der Atmosphäre in der Gärkammer vorhanden sein soll, wird entsprechend die Öffnungsweite des Auslasses reduziert oder dieser Auslass vollständig verschlossen, sodass dann zur Bereitstellung eines homogenen Klimas innerhalb der Gärkammer der Gärapparat im Umluftbetrieb arbeitet.

In einer anderen Ausgestaltung ist vorgesehen, dass die Gärkammer mit einem im oberen Bereich befindlichen Einlass an ein Klimatisierungsmodul angeschlossen wird. Typischerweise verfügt eine solche Gärkammer ebenfalls über einen unterseitigen Auslass, der ebenfalls an das Klimatisierungsmodul angeschlossen wird. Bei einer solchen Ausgestaltung besteht die Möglichkeit, an ein solches separates Klimatisierungsmodul auch mehrere Gärkammern anschließen zu können. Vorgesehen ist dabei, dass jede Gärkammer unabhängig von der oder den anderen Gärkammern bezüglich seiner Klimatisierung eingestellt beziehungsweise geregelt werden kann.

Die Einflussnahme auf das Klima innerhalb der Gärkammer durch eine Luftströmung kann in sehr kurzer Zeit, quasi spontan erfolgen, und zwar sowohl in Bezug auf eine gewünschte Temperaturänderung, eine Änderung in der Strömungsgeschwindigkeit oder auch in seiner Aerosolbeladung. Dieses bedingt nicht nur eine rasche Anpassung eines IST-Wertes an einen SOLL-Wert bei einem festgestellten Sollwertsprung, sondern erlaubt zudem eine sehr exakte Führung dieser Konditionierungsgrößen sei es zum Konstanthalten einer klimatischen Umgebung des Lebensmittels oder auch bei Temperaturänderungsprozessen über die gesamte Dauer des Konditionierungsprozesses. Aus diesem Grunde eignet sich dieses Verfahren zur Verbesserung der Einstellung der gewünschten Qualität der Teiglinge auch, um in den Regelungsprozess klimatische Daten, die außerhalb der Gärkammer beziehungsweise des Gärapparates und typischerweise außerhalb des Gebäudes, in dem sich die Gärkammer beziehungsweise der Gärapparat befindet, einfließen zu lassen. Eine solche Einflussnahme erfolgt, sollte dieses notwendig sein, sodann vorausschauend, um größere Sollwertsprünge innerhalb der Gärkammer zu vermeiden. Derartige Sollwertsprünge können beispielsweise luftdruckbedingt sein. Ändert sich, etwa aufgrund einer Wetteränderung außerhalb des Gebäudes der absolute Wassergehalt, die Temperatur und/oder der Luftdruck rasch, wird sich dieses in der Gärkammer mit einer bestimmten Verzögerung bemerkbar machen. Um einen dann in der Gärkammer festgestellten größeren Sollwertsprung nicht über seine gesamte Größe spontan ausregeln zu müssen, was zu einem Über- oder Unterschwingen führen kann, kann durch rechtzeitiges Ändern der Stellgröße auf zumindest eines der Stellglieder auf den erwarteten Sollwertsprung vorausschauend reagiert werden. Berücksichtigt wird bei dieser Einflussnahme dabei diejenige Zeit, die eine solche klimatische Änderung, festgestellt außerhalb der Gärkammer, benötigt, um sich in der Gärkammer bemerkbar zu machen. Die Folge ist, dass außerhalb der Gärkammer abspielende klimatische Änderungen dann nicht negativ auf die Qualität des Gärprozesses durchschlagen. Damit kann eine hohe Qualität auf konstant hohem Niveau auch bei herstellungsbedingten Temperaturänderungsprozessen selbst bei sich rasch abspielenden klimatischen Änderungen in der Umgebung der Gärkammer gewährleistet werden.

Mit diesem Verfahren können auch regelmäßig wiederkehrende klimatische Änderungen außerhalb der Gärkammer antizipiert werden, wie etwa der Temperaturgang über den Tag, mit dem sich auch der Taupunkt, der absolute Wassergehalt in der Umgebungsluft ändern. Entsprechendes gilt für jahreszeitliche Änderungen bei diesen klimatischen Größen.

Für den Fall, dass mit dem Gärapparat eine Gärverzögerung oder Gärunterbrechung vorgenommen werden soll und somit die Temperatur in der Gärkammer auf die hierzu notwendigen Temperaturen gekühlt werden muss, ist dem Klimatisierungsmodul ein Kälteaggregat zugehörig. Dieses stellt die notwendigen Temperaturen für eine Gärverzögerung und/oder Gärunterbrechung, je nach Verfahrensführung, zur Verfügung. Die Zufuhr von Wasser-Aerosolen bis Temperaturen von ca. -5°C bis -8°C stellt gemeinhin kein Problem dar. Unterhalb dieser Temperatur tritt in aller Regel eine Schneebildung ein.

Nachstehend ist die Erfindung anhand eines Ausführungsbeispiels unter Bezugnahme auf die beigefügten Figuren beschrieben. Es zeigen:
- **Fig. 1:**: Eine schematisierte Darstellung eines Gärapparates zum Gären von Teiglingen,
- **Fig. 2:**: eine schematisierte Darstellung eines Gärapparates zum Gären von Teiglingen gemäß einer Weiterbildung des Gärapparates der Figur 1,
- **Fig. 3:**: ein Diagramm, darstellend den CO₂-Gehalt in der Gärkammer eines als Gärvollautomaten ausgelegten Gärapparates während eines Gärprozesses nach einer 0°C-Gärverzögerung und
- **Fig. 4:**: ein Diagramm entsprechend demjenigen der Figur 2, darstellend den CO₂-Gehalt in der Gärkammer eines Gärvollautomaten nach einer Teiglings-Lagertemperatur von ca. -5°C bis - 10°C (Gärunterbrechung).

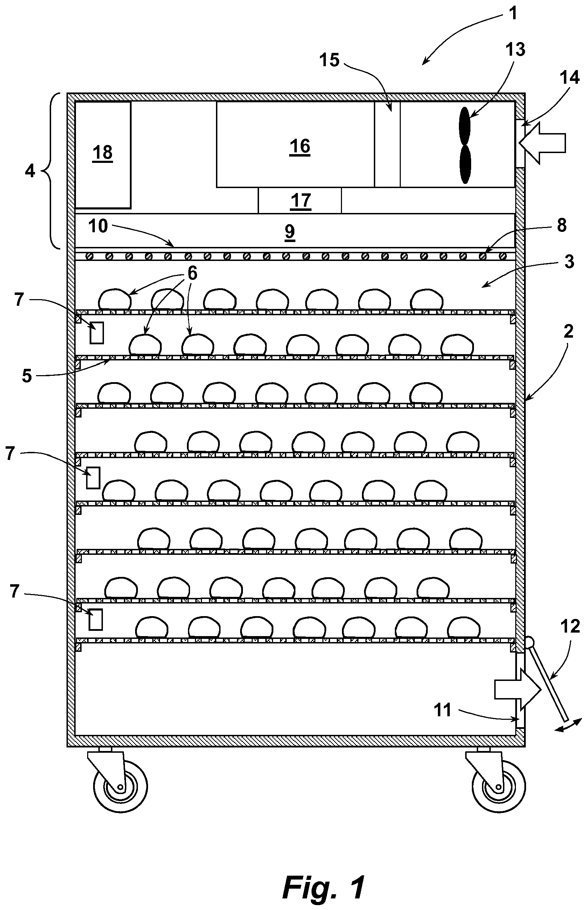

Figur 1 zeigt eine schematisierte Darstellung eines Gärapparates 1 zum Gären von Teiglingen, aus denen Backwaren gebacken werden. Der Gärapparat 1 des dargestellten Ausführungsbeispiels ist als fahrbarer Gärschrank ausgeführt. Der Gärapparat 1 umfasst ein temperaturisoliertes Gehäuse 2. Das Gehäuse 2 ist in zwei übereinanderliegende Bereiche unterteilt, wobei der untere Teil des Gehäuses 2 eine Gärkammer 3 einfasst. Im oberen Teil des Gehäuses 3 befindet sich ein insgesamt mit dem Bezugszeichen 4 gekennzeichnetes Klimatisierungsmodul. Die Gärkammer 3 verfügt gehäuseinnenseitig über mehrere übereinanderliegende Einrichtungen zur Aufnahme jeweils eines Gärbleches 5, auf dem zu gärende Teiglinge 6 angeordnet sind. Bei den Gärblechen 5 handelt es sich um Lochbleche. In der Gärkammer 3 befinden sich bei dem dargestellten Ausführungsbeispiel drei Sensoranordnungen 7. Die Sensoranordnungen 7 befinden sich beim dargestellten Ausführungsbeispiel in drei unterschiedlichen Höhen der Gärkammer 3. Jede Sensoranordnung ist als Vierfach-Sensor konzipiert und umfasst einen CO₂-Sensor, einen Temperatursensor, einen Feuchtigkeitssensor sowie einen Drucksensor. Das Vorsehen von drei Sensoranordnungen 7 erlaubt eine Erfassung von für den Gärprozess bei dem beschriebenen Ausführungsbeispiel überwachten klimatischen Daten in unterschiedlichen Höhen, um während des Gärprozesses dafür Sorge zu tragen, dass die klimatischen Bedingungen in der Höhe der Gärkammer 3 gleich sind.

Ein Gitter 8 trennt die Gärkammer 3 von der Klimatisierungsmodul 4. Oberhalb des Gitters 8 befindet sich ein Sammler 9 als Teil des Klimatisierungsmoduls 4, der sich über die Innengrundfläche der Gärkammer 3 erstreckt. Der Sammler 9 weist unterseitig eine für mit Aerosol beladene Luft durchströmbare Materialbahn 10 auf. Der Hohlraum des Sammlers 9 dient zum Verteilen eines in diesen eingebrachten Luftstromes über die Grundfläche der Gärkammer 3, damit dieser weitestgehend homogen über diese Grundfläche verteilt aus dem Sammler 9 austritt und oberseitig in die Gärkammer 3 eingeleitet wird. Bei dem dargestellten Ausführungsbeispiel stellt das Gitter 8 den Einlass der Gärkammer 3 dar. Dieser Einlass bildet das Dach der Gärkammer 3. Im Bodenbereich einer der Wände des Gehäuses 2 befindet sich ein Auslass 11. Dem Auslass 11 ist eine Stellklappe 12 zugeordnet, mit dem die Öffnung des Auslasses 11 verschlossen werden kann und mit dem die Öffnungsweite des Auslasses 11 eingestellt werden kann. Die Stellklappe 12 wird durch einen in der Figur nicht dargestellten elektrischen Aktor verstellt.

Das Klimatisierungsmodul 4 umfasst ein elektrisch betriebenes Gebläse 13 zum Fördern eines in die Gärkammer 3 hineingeleiteten Luftstroms. Angesaugt wird der Luftstrom durch eine Einlassöffnung 14 in dem Gehäuse 2. Die Einlassöffnung 14 und der Auslass 11 befinden sich an der selben Seite des Gehäuses 2 des Gärapparates 1. Der von dem Ventilator 13 geförderte Luftstrom durchtritt zunächst eine Temperiereinheit 15, in der der Luftstrom auf die gewünschte Temperatur temperiert wird. Der durch die Temperiereinheit 15 geleitete Luftstrom wird sodann einer Aerosolerzeugungseinrichtung 16 zugeführt. Bei der Aerosolerzeugungseinrichtung 16 handelt es sich bei dargestellten Ausführungsbeispiel um eine Einrichtung, um Aerosol mit einer Tröpfchengröße von 0,001 bis 0,005 mm oder kleiner zu erzeugen. Die erzeugten Aerosoltröpfchen werden von dem die Aerosolerzeugungseinrichtung 16 durchströmenden Luftstrom erfasst und mitgeführt, und zwar auch bei geringen Strömungsgeschwindigkeiten des Luftstromes. Aufgrund der kleinen Tröpfchengröße ist dieses ohne weiteres möglich. Die Aerosolerzeugungseinrichtung 16 stellt das Aerosol als keimfreies Wasser her. Die Aerosolerzeugungseinrichtung 16 ist ausgelegt, damit dem der Aerosolerzeugung zugeführten Wasser Nutzstoffe beigemengt werden können. Bei dem dargestellten Ausführungsbeispiel verfügt der Gärapparat 1 über einen Tank, der mit einer mikrobiellen und/oder antifungalen Lösung gefüllt ist (in der Figur nicht gezeigt). Sollen die Aerosoltröpfchen mit einer solchen Lösung beladen sein, wird vor der Aerosolerzeugung eine bestimmte Dosis dem zu zerstäubendem Wasser beigemengt. Der Aerosolerzeugungseinrichtung 16 nachgeschaltet ist eine Sauerstoffanreicherung 17. Diese dient dem Zwecke, den Sauerstoffgehalt in den Aerosoltröpfchen zu erhöhen. Ziel dieser Maßnahme ist es u.a., den Teiglingen ausreichend Sauerstoff zur Verfügung zu stellen oder die Hefe partiell zu aktivieren. Dieses kann durch eine Sauerstoffanreicherung des Aerosols, durchaus verbunden mit einer Beimengung von L-Ascorbinsäure in das sauerstoffimprägnierte Wasser-Aerosol geschehen, um eine sofortige und besonders teigwirksame Form der oxidierten L-Ascorbinsäure als Reaktionsprodukt(e) bereitzustellen. In Abhängigkeit von dem gewünschten Sauerstoffgehalt in dem Wasser-Aerosol kann beispielsweise ein einfaches Einleiten von Sauerstoffgas oder von Luft ausreichen. Hiermit lassen sich Sauerstoffgehalte von 15 bis 20 ppm bei einer Wassertemperatur von etwa 10 °C erzielen. Bessere Effekte auf die zu gärenden Teiglinge erzielt man mit Sauerstoffgehalten in den Wasser-Aerosoltröpfchen, wenn diese eine Konzentration von 50 bis 100 ppm aufweisen. Begünstigt wird der gewünschte Effekt, wenn die Wasser-Aerosoltröpfchen zusätzlich ascorbinsäurehaltig sind. Zum Erreichen derartiger Sauerstoffkonzentrationen wird das Wasser druckimprägniert. Der Ausgang der Sauerstoffanreicherung 17 mündet in den Sammler 9, aus dem unterseitig der Luftstrom mit dem mitgeführten Aerosol aus- und die Gärkammer 3 eintritt.

Bei dem dargestellten Ausführungsbeispiel umfasst die Temperiereinheit 15 auch ein Kälteaggregat, um die Gärkammer 3 auf die für eine Gärverzögerung oder Gärunterbrechung benötigten Temperaturen kühlen zu können. Bei dem dargestellten Ausführungsbeispiel kann mit dem Kälteaggregat der Temperiereinrichtung 15 die Temperatur in der Gärkammer 3 auf -15°C gekühlt werden.

Teil des Klimatisierungsmoduls 4 ist eine Steuereinrichtung 18 mit den zum Betreiben des Gärapparates 1 erforderlichen Prozessoren, Speichern und dergleichen. Die Sensoranordnungen 7 sind an die Steuereinrichtung 18 ebenso angeschlossen, wie der in der Figur nicht gezeigte Stellklappe 12 betätigende elektrische Aktor.

Der Gärapparat 1 arbeitet wie folgt: Durch die Einlassöffnung 14 wird beim Betrieb des Ventilators 13 Umgebungsluft angesaugt und durch die Temperiereinheit 15 geleitet. Über die Temperiereinheit 15 kann der Luftstrom erwärmt oder auch gekühlt werden, je nachdem welche Temperatur der in die Gärkammer 3 eintretende Luftstrom aufweisen soll. Der temperierte Luftstrom durchtritt anschließend die Aerosolerzeugungseinrichtung 16 und wird in Abhängigkeit von dem in der Gärkammer 3 gewünschten absoluten Feuchtigkeitsgehalt und dem IST-Wassergehalt mit einem entsprechenden Aerosolgehalt beladen. Gegebenenfalls können dem Aerosol Zusatzstoffe beigefügt werden. Bei dem dargestellten Ausführungsbeispiel ist der Aerosolerzeugungseinrichtung 16 eine Sauerstoffanreicherung 17 nachgeschaltet. Über diese kann, wenn gewünscht, der Sauerstoffgehalt im Aerosol erhöht werden. In dem Sammler 9 verteilt sich der darin eingeleitete Luftstrom über die Basisfläche der Gärkammer 3 und tritt durch die diesbezüglich durchlässige Materialbahn 10 in Richtung zur Gärkammer 3 aus und von oben in die Gärkammer 3 ein. Die austretende Strömung ist vorzugsweise eine lamellare Strömung. Aufgrund der beim Betrieb des Gärapparates 1 typischerweise geöffneten Stellklappe 12 wird der aus dem Sammler 9 austretende Luftstrom durch die Gärkammer 3 von oben nach unten hindurch geleitet und tritt als Abluft aus dem Auslass 11 aus. Die Ausgestaltung der Gärbleche 5 als Lochbleche erlaubt eine homogene Durchströmbarkeit der gesamten Gärkammer 3.

Die Steuereinrichtung 18 ist mit einer Bedieneinheit ausgestattet, über die eines von mehreren Gärprogrammen ausgewählt werden kann. Die Gärprogramme selbst sind individuell programmierbar. Der Gärprozess wird auf Grundlage der mit den Sensoranordnungen 7 erfassten klimatischen Daten innerhalb der Gärkammer 3 gesteuert, wobei die CO₂-Überwachung und CO₂-Kontrolle eine wesentliche Komponente in der Prozesssteuerung beziehungsweise -regelung darstellt. Um den Gärprozess für die Teiglinge 6 in Bezug auf das gewünschte Ergebnis optimal durchführen zu können, wird der CO₂-Gehalt überwacht und entsprechend einer vorgegebenen Kurve während des Gärprozesses geregelt. Dabei wird man den in der Umgebung der Teiglinge 6 befindlichen CO₂-Gehalt so wählen, dass dieser hinreichend groß, jedoch nicht zu groß ist. Ein zu hoher CO₂-Gehalt in der Umgebung der Teiglinge wirkt sich negativ auf die Qualität der Teiglinge und damit der Gebäcke aus. Gleiches gilt für einen zu geringen CO₂-Anteil. Es versteht sich, dass sich der CO₂-Gehalt während einer ersten Phase eines Gärprozesses durch die Aktivität der Hefen und gegebenenfalls Sauerteigbakterien zunächst aufbaut. Die Regelung des CO₂-Gehaltes setzt sich typischerweise ab Erreichen einer bestimmten Konzentration ein. Dieser braucht über die Zeitdauer des Gärprozesses nicht konstant zu sein, kann jedoch konstant bleiben. Es hat sich überraschend gezeigt, dass die Kontrolle des CO₂-Gehaltes in der Umgebung der Teiglinge die Qualität der gegärten Teiglinge deutlich beeinflusst und vor allem auch negativ beeinflussen kann, wenn der CO₂-Gehalt nicht überwacht und kontrolliert wird.

Der Gärprozess kann einer vorgegebenen Temperaturkurve folgen. Daher kann sich die Temperatur des in die Gärkammer 3 eingeleiteten Luftstroms über die Dauer des Gärprozesses hinweg verändern. Auf diese Weise können unterschiedliche Stadien während des Gärprozesses bei unterschiedlichen Temperaturen ablaufen, wenn dieses gewünscht ist. Die Temperatur ist eine Stellgröße, über die der Gärprozess beschleunigt oder auch verlangsamt werden kann. Somit hat auch die Temperatur neben dem CO₂-Gehalt einen unmittelbaren Einfluss auf den Gärprozess.

Bei dem dargestellten Ausführungsbeispiel wird ebenfalls der Druck in der Gärkammer 3 überwacht. Dieses dient unter anderem dem Zweck, bei wetterbedingten unterschiedlichen Umgebungsluftdrücken denjenigen in der Gärkammer 3 konstant zu halten. Bei dem Gärapparat 1 ist eine Druckerniedrigung gegenüber dem Umgebungsdruck nicht vorgesehen, hingegen jedoch eine Druckerhöhung, die entweder durch Erhöhen des Zuluftstromes und/oder durch Reduzieren der Öffnungsweite des Auslasses 11 mittels der Stellklappe 12 möglich ist. Auf diese Weise können Wetterumschwünge, vor allem rasch stattfindende Wetterumschwünge, die eine Reduzierung des Umgebungsluftdruckes zufolge haben, kompensiert werden. Auch der Umgebungsluftdruck hat Einfluss auf den Gärprozess.

Die für den Gärprozess gewünschte Luftfeuchtigkeit wird über die Aerosolbeladung des in die Gärkammer 3 eingeleiteten Luftstroms bereitgestellt. Dieser kann sich von einer Teiglingcharge zur nächsten Teiglingcharge unterscheiden. Auch kann die Luftfeuchtigkeit der Gärkammer 3 während des Gärprozesses ohne Weiteres verändert werden.

Ein zu hoher CO₂-Gehalt kann durch Zuführen von Sauerstoff angereicherten Aerosol kompensiert werden, um den Teiglingen 6 auf diese Weise den für den Gärprozess benötigten Sauerstoff zur Verfügung zu stellen. Eine solche Maßnahme ist sehr effizient, da der Sauerstoff Aerosoltröpfchen getragen an die Teiglingoberfläche und von dieser in die Teiglinge 6 gelangt und somit gekapselt die in der unmittelbaren Umgebung des Teiglings 6 befindliche CO₂-haltige Atmosphäre durchdringt, ohne den CO₂-Gehalt in der Umgebung des Teiglings 6 zu verdünnen, jedenfalls nicht in nennenswertem Maße. Auf diese Weise kann der Teigling 6 während des Gärprozesses in der für ihn günstigen CO₂-angereicherten Atmosphäre verbleiben und dennoch dem Teigling 6 der für den Ablauf des Gärprozesses notwendige Sauerstoff in dem gewünschten Maße zur Optimierung des Gärprozesses zugeführt werden. Auf diese Weise können beide für den Gärprozess gewünschten Gase - CO₂ und O₂ - in entsprechend hoher Konzentration den Teiglingen 6 zur Verfügung gestellt werden. Dieses war herkömmlich nicht möglich, da die Konzentration der beiden Gase in der Umgebung der Teiglinge 6 mit fortschreitendem Gärprozess gegenläufig ist.

Ein zu hoher CO₂-Gehalt in der Gärkammer kann auch durch einen erhöhten Volumenstrom des in die Gärkammer 3 durchdringenden Luftstroms verdünnt beziehungsweise weggespült werden.

Die CO₂-Überwachung dient auch dem Sicherheitsaspekt, dass in der Gärkammer 3 am Ende des Gärprozesses der CO₂-Gehalt nicht eine kritische Größe erreicht hat und dass beim Öffnen der Gärkammer 3 ausströmendes CO₂ für eine den Gärapparat 1 bedienende Person gesundheitlich bedenklich wäre. Insofern kann vorgesehen sein, zum Ende des Gärprozesses die Gärkammer 3 mit einem Luftstrom zu spülen und damit kontrolliert das darin befindliche CO₂ herauszubringen. Gleichzeitig wird die Temperatur in der Gärkammer 3 reduziert, um den Gärprozess in den Teiglingen 6 zu verlangsamen.

Das aus dem Auslass 11 abgeführte CO₂ kann zur Beschleunigung des Beginns des Gärprozesses einer anderen, der Gärkammer 3 bezüglich der Strömungsrichtung des Luftstromes nachgeschalteten Gärkammer eines Gärapparates zugeführt werden. Dann startet der Gärprozess bereits mit einer erhöhten CO₂-Konzentration. Sollte für einen solchen oder einen anderen Zweck die CO₂-Konzentration in der aus den Auslass 11 austretenden Abluft für eine nachfolgende Anwendung nicht hoch genug sein, kann die Konzentration mittels eines CO₂-Abschneiders erhöht werden.

In die Steuerung des Gärprozesses fließen bei dem dargestellten Ausführungsbeispiel ebenfalls klimatische Größen ein, die außerhalb der Gärkammer 3 erfasst werden. Auf diese Weise kann beispielsweise eintretende Luftdruckschwankungen begegnet werden. Zudem erhält die Steuereinheit 18 dann auch Werte zu der Temperatur und der Feuchtigkeit und dem CO₂-Gehalt der durch die Einlassöffnung 14 angesaugten Umgebungsluft. Bei diesen Daten kann es sich auch um solche handeln, die außerhalb des Raumes erfasst werden, in der sich der Gärapparat 1 befindet.

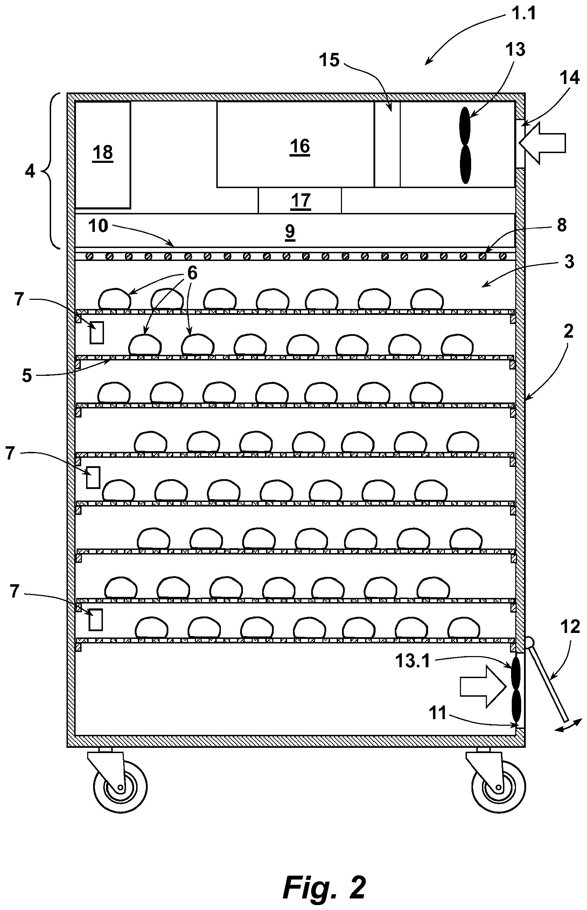

Figur 2 zeigt einen weiteren Gärapparat 1.1, der prinzipiell genauso aufgebaut ist wie der zu Figur 1 beschriebene Gärapparat 1. Aus diesem Grunde sind gleiche Elemente bzw. Bauteile in dem Gärapparat 1.1 mit denselben Bezugszeichen wie bei dem Gärapparat 1 kenntlich gemacht. Der Gärapparat 1.1 verfügt neben dem Ventilator 13, angeordnet im Bereich der Einlassöffnung 14, über einen zweiten Ventilator 13.1. Der Ventilator 13.1 ist im Bereich des Auslasses 11 angeordnet. Der Ventilator 13.1 ist an die Steuereinrichtung 18 des Klimatisierungsmoduls 4 angeschlossen. Bei dem Gärapparat 1.1 werden die Ventilatoren 13, 13.1 typischerweise gleichsinnig betrieben. Bei dem Gärapparat 1.1 kann ein Luftstrom, wie dieses bereits zu dem Gärapparat 1 beschrieben ist, erzeugt werden, der in vertikaler Richtung die Gärkammer 3 von oben nach unten durchströmt. Durch eine unterschiedliche Drehzahl der Ventilatoren 13 bzw. 13.1 kann Einfluss auf die Luftströmung innerhalb der Gärkammer 3 und auch auf den darin herrschenden Luftdruck genommen werden. Insofern kann auf diese Weise die Strömungsgeschwindigkeit und der Luftdruck innerhalb der Gärkammer 3 auch unabhängig von der Stellung der Stellklappe 12 beeinflusst werden. Ebenso ist ein Zusammenspiel zwischen den Drehgeschwindigkeiten der Propeller der Ventilatoren 13, 13.1 und der Öffnungsweite der Stellklappe 12 bezüglich des Auslasses 11 möglich. Mit dem Gärapparat 1.1 ist es auch möglich, einen Luftstrom auszubilden, der in umgekehrter Richtung strömt und der somit über den Auslass 11 in die Gärkammer 3 eintritt und über die Einlassöffnung 14 austritt.

In einer in den Figuren nicht dargestellten Ausgestaltung verfügt ein solcher Gärapparat neben dem zu dem Gärapparat der Figur 1 oberhalb der Gärkammer 3 angeordneten Klimatisierungsmodul 4 auch über ein Klimatisierungsmodul unterhalb der Gärkammer. Bei einer solchen Ausgestaltung kann dann auf den Luftstrom bezüglich der klimatischen Umgebung der gärenden Teiglinge in der Gärkammer 3 in gleicher Weise bezüglich der Temperatur und des Feuchtigkeitsgehaltes Einfluss genommen werden, auch wenn der Luftstrom über den Auslass 11 einströmt, wie dieses zu dem Gärapparat 1 beschrieben ist, bei dem der Luftstrom von oben aus dem Klimatisierungsmodul 4 in die Gärkammer 3 eintritt.

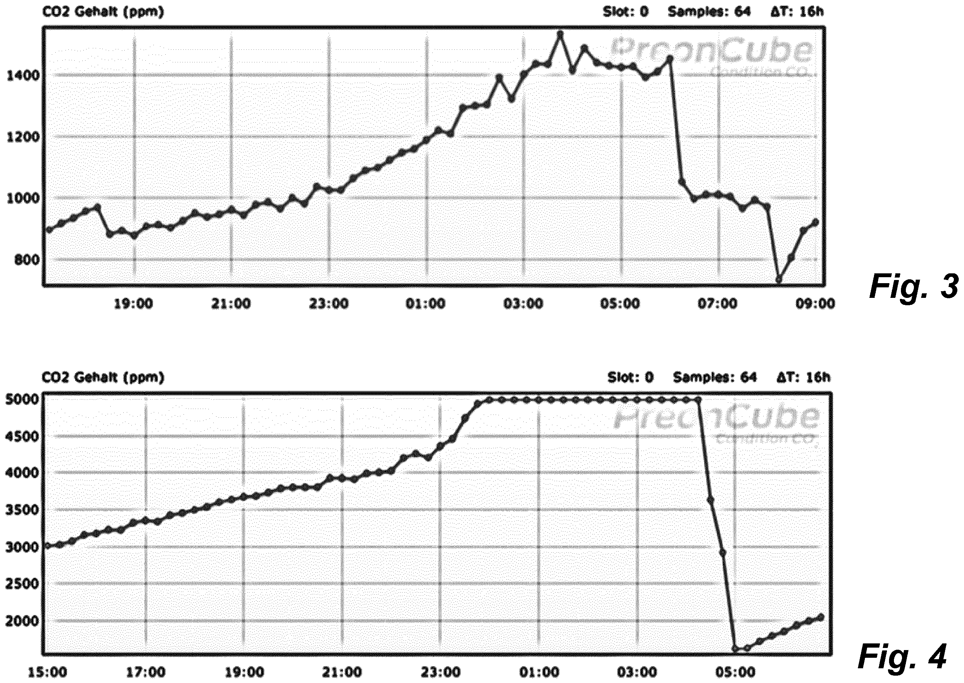

Figur 3 zeigt ein Diagramm zu der Entwicklung des CO₂-Gehaltes in der Gärkammer eines Gärvollautomaten während eines Gärprozesses, wobei der Gärprozess der Teiglinge nach dem vorbeschriebenen Verfahren gesteuert worden ist. Dieses gilt sowohl für die CO₂-Überwachung, die O₂-Überwachung sowie die relative Feuchtigkeitsüberwachung. Der Gärprozess, zu dem die CO₂-Gehaltskurve aufgezeichnet worden ist, wurde nach einer 0 °C-Gärverzögerung durchgeführt. Der Gärprozess wurde gegen 24:00 gestartet. Bis zu diesem Zeitpunkt belief sich die Temperatur in der Gärkammer auf etwa 0 °C. Die Temperatur stieg bis etwa 4:00 auf +17 Grad an und wurde auf diese Temperatur bis 06:00 gehalten, bevor die Temperatur wieder abgesenkt worden ist. Die Entwicklung des CO₂-Gehaltes in der Gärkammer überschreitet den Wert von 1500 ppm nicht. Durchgeführt wurde das Verfahren, damit der CO₂-Gehalt in der Gärkammer einen Wert von 1450 ppm nicht überschreitet. Der Verlauf des Kurvenabschnittes beginnend um 2:00 Uhr bis etwa 6:00 Uhr zeigt durch die Schwankungen im CO₂-Gehalt die verfahrensgemäße Einflussnahme durch Kontrollieren des CO₂- Gehaltes durch Zufuhr von Umgebungsluft.

Figur 4 zeigt ein Vergleichsdiagramm eines herkömmlich durchgeführten Gärprozesses in einem Gärvollautomaten. Um 22:00 Uhr wurde der Gärprozess durch Anstieg der Temperatur in der Gärkammer gestartet. Bis dahin wurde die Temperatur der Gärkammer auf etwa -5°C bis -10°C gehalten. Die Temperatur wurde ebenfalls auf +17 °C in der Gärkammer hochgefahren und gegen 2:30 in einer ersten Stufe auf etwa 10 °C abgesenkt. Um 3:30 wurde die Temperatur auf -5°C oder kälter abgesenkt.

Die Unterschiede in dem CO₂-Gehalt in der Gärkammer zwischen den beiden Vergleichsversuchen sind signifikant. Der CO₂-Gehalt in der Gärkammer, in der der herkömmliche Gärprozess durchgeführt worden ist, beträgt bereits vor dem eigentlichen Beginn des Gärprozesses über 4000 ppm, der durch den Temperaturanstieg getriggert wird, und steigt auf ca. 7000 ppm an. In dem Diagramm sind die einen Gehalt von 5000 ppm überschreitenden Messwerte abgeschnitten. Der bereits bei Einleiten des Temperaturanstieges vorhandene CO₂-Gehalt resultiert aus der auch bei der Temperatur von -5°C stattfindenden Gäraktivität.

Der durch das erfindungsgemäße Verfahren kontrollierte und insbesondere auch geringer zu haltende CO₂-Gehalt in der Gärkammer während des Gärprozesses erlaubt eine Reduzierung des Einsatzes von Backmitteln. Daher ist die Überwachung und Regelung des CO₂-Gehaltes in der Gärkammer eines Gärapparates, und zwar unabhängig von seiner Ausführung für eine Verbesserung der Teigqualität und somit der Qualität der daraus hergestellten Backwaren, sondern auch für den Hintergrund der eingesetzten der Ressourcen, insbesondere Backmittel, ein unerwarteter Vorteil. Dieses gilt auch für den geringeren Einsatz von Backmitteln, wodurch die Qualität der Backwaren ebenfalls verbessert werden kann. Der geringere Einsatz an Backmitteln macht sich bereits in dem CO₂-Anteil bemerkbar, der vor der Temperaturerhöhung, durch die die eigentliche Gäraktivität ausgelöst wird, vorhanden ist. Während in der Gärkammer bei dem herkömmlich durchgeführten Verfahren bereits ein CO₂-Gehalt von über 4000 ppm zum Zeitpunkt des Temperaturanstieges vorliegt, beträgt der CO₂-Gehalt bei Durchführen des erfindungsgemäßen Verfahrens zu Beginn des Temperaturanstieges nur wenig über 1000 ppm. Die Regelung der klimatischen Werte innerhalb der Gärkammer erfolgt durch einen IST SOLL-Wert Vergleich der erfassten Daten, wie dieses an sich bekannt ist.

### Bezugszeichenliste

- 1,1.1: Gärapparat
- 2: Gehäuse
- 3: Gärkammer
- 4: Klimatisierungsmodul
- 5: Gärblech
- 6: Teigling
- 7: Sensoranordnung
- 8: Gitter
- 9: Sammler
- 10: Materialbahn
- 11: Auslass
- 12: Stellklappe
- 13, 13.1: Ventilator
- 14: Einlassöffnung
- 15: Temperiereinheit
- 16: Aerosolerzeugungseinrichtung
- 17: Sauerstoffanreicherung
- 18: Steuereinrichtung

## Patentansprüche

1. Gärapparat zum Gären von Teiglingen (6) mit einer Gärkammer (3) zur Aufnahme von zu gärenden Teiglingen (6) und mit einem Klimatisierungsmodul (4) zum Steuern des Klimas in der Gärkammer (3) für den Gärprozess, welches Klimatisierungsmodul (4) eine Steuereinrichtung (18) zum Steuern des Gärprozesses in Abhängigkeit von in der Gärkammer (3) erfassten klimatischen Daten zugeordnet ist, welches Klimatisierungsmodul (4) eine Einrichtung (15) zum Erzeugen eines Luftstroms sowie eine Einrichtung (15) zum Erzeugen von von dem Luftstrom mitzuführendem Aerosol auf wässriger Basis umfasst und welche Gärkammer (3) einen oberen Einlass (8) für die durch das Klimatisierungsmodul (4) bereitgestellten Klimatisierungsmedien Luft und Feuchtigkeit und einen unteren, bezüglich seiner Öffnungsweite einstellbaren Auslass (11) aufweist, über welchen Einlass (8) bei einem Betrieb des Gärapparates (1, 1.1) zum Gären von Teiglingen (6) ein von dem Klimatisierungsmodul (4) erzeugter Luftstrom in die Gärkammer (3) eingeleitet wird, welcher Luftstrom aus dem Auslass (11) der Gärkammer (3) herausströmt, und in welcher Gärkammer (3) zumindest jeweils ein Temperatursensor, ein Feuchtigkeitssensor und ein CO₂-Sensor angeordnet sind, welche Sensoren (7) zum Übermitteln der erfassten klimatischen Daten an die Steuereinrichtung (18) eingerichtet sind.

2. Gärapparat nach Anspruch 1, **dadurch gekennzeichnet, dass** zum Einstellen der Öffnungsweite des Auslasses (11) ein elektrischer, von der Steuereinrichtung (18) ansteuerbarer Aktor vorgesehen ist.

3. Gärapparat nach Anspruch 1 oder 2, **dadurch gekennzeichnet, dass** das Klimatisierungsmodul (4) Teil des Gärapparates (1, 1.1) und oberhalb der Gärkammer (3) angeordnet ist.

4. Gärapparat nach einem der Ansprüche 1 bis 3, **dadurch gekennzeichnet, dass** Klimatisierungsmodul (4) eine Temperiereinrichtung (15) zum Temperieren des bei einem Betrieb des Gärapparates (1, 1.1) erzeugten und in die Gärkammer (3) eingeleiteten Luftstroms aufweist.

5. Gärapparat nach einem der Ansprüche 1 bis 4, **dadurch gekennzeichnet, dass** die Einrichtung (16) zum Erzeugen von Aerosol Mittel zum Erzeugen von mit zumindest einem Zusatzstoff beladenem Aerosol umfasst.

6. Gärapparat nach einem der Ansprüche 1 bis 5, **dadurch gekennzeichnet, dass** in der Gärkammer (3) ein O₂-Sensor angeordnet ist, welcher Sensor zum Übermitteln von Daten an die Steuereinrichtung (18) eingerichtet ist.

7. Verfahren zum Konditionieren des Klimas in der Gärkammer (3) eines Gärapparates (1, 1.1) zum Gären von in der Gärkammer (3) befindlichen Teiglingen (6), insbesondere zum Betreiben eines Gärapparates (1, 1.1) nach einem der Ansprüche 1 bis 6, **dadurch gekennzeichnet, dass**
a) auf den Gärprozess Einfluss nehmende klimatische Daten während des Gärprozesses innerhalb der Gärkammer erfasst werden, wobei als klimatische Daten die Konditionierungsgrößen Temperatur, absoluter Wassergehalt und der CO₂Gehalt als IST Werte erfasst und mit bezüglich der zu gärenden Teiglinge vorgesehenen SOLL-Werten verglichen werden, und
b) bei Feststellen einer Abweichung eines IST-Wertes von dem diesen zugeordneten SOLL-Wert auf das Klima in der Gärkammer zum Anpassen des IST-Wertes an den SOLL-Wert Einfluss genommen wird, wobei zur Einflussnahme über einen oberen Einlass in die Gärkammer eine Luftströmung eingeleitet und durch die Gärkammer hindurchgeleitet wird und
(i) eine Einflussnahme in Bezug auf eine Anpassung der IST-Temperatur an die SOLL-Temperatur durch die zugeführte Luftmenge und/oder die Temperatur des der zugeführten Luftströmung,
(ii) eine Einflussnahme in Bezug auf eine Anpassung des absoluten IST-Wassergehaltes an den absoluten SOLL-Wassergehalt durch eine entsprechende Wasser-Aerosol-Beladung der Luftströmung vorgenommen wird und
(iii) eine Einflussnahme in Bezug auf eine Anpassung des CO₂-IST-Wertes an den SOLL-Wert durch eine Änderung des Volumenstroms des die Gärkammer durchströmenden Luftstroms vorgenommen wird.

8. Verfahren nach Anspruch 7, **dadurch gekennzeichnet, dass** der Volumenstrom durch eine Änderung der Öffnungsweite des Auslasses (11) der Gärkammer (3) eingestellt wird.

9. Verfahren nach Anspruch 7 und 8, **dadurch gekennzeichnet, dass** mit dem Luftstrom in die Gärkammer (3) einzuleitendes Aerosol mit zumindest einem Zusatzstoff beladen wird.

10. Verfahren nach Anspruch 9, **dadurch gekennzeichnet, dass** es sich bei dem Zusatzstoff um O₂ und/oder Ascorbinsäure handelt.

11. Verfahren nach einem der Ansprüche 7 bis 10, **dadurch gekennzeichnet, dass** zusätzlich der innerhalb der Gärkammer (3) herrschende Luftdruck als IST-Wert erfasst und eine Einflussnahme in Bezug auf eine Anpassung des IST-Druckes an den SOLL-Druck durch die in die Gärkammer (3) eingeleitete Luftmenge erfolgt.

12. Verfahren nach einem der Ansprüche 7 bis 11, **dadurch gekennzeichnet, dass** auf die Teiglinge (6) in der Gärkammer (3) Einfluss nehmende klimatische Daten außerhalb der Gärkammer (3) erfasst werden, wobei als klimatische Daten zumindest eine der klimatischen Größen: Temperatur, absoluter Wassergehalt und Luftdruck als IST-Außenwerte erfasst und mit dem jeweiligen SOLL-Wert sowie der Differenz des SOLL-Wertes und dem innerhalb der Gärkammer (3) erfassten IST-Wert verglichen wird, und dass bei Feststellen einer Abweichung zwischen einem außerhalb der Gärkammer (3) erfassten IST-Außenwert und dem SOLL-Wert in Abhängigkeit von der Reaktionsträgheit, ob und inwieweit eine Änderung des IST-Außenwertes zu einer Änderung des IST-Wertes innerhalb der Gärkammer (3) führt, das Klima in der Gärkammer (3) an den sich ändernden Sollwertsprung angepasst wird.

13. Verfahren nach Anspruch 12, **dadurch gekennzeichnet, dass** die außerhalb der Gärkammer (3) erfassten Daten klimatische Daten der Außenumgebung des Gebäudes sind, in dem sich die Gärkammer (3) befindet.

14. Verfahren nach Anspruch 12 oder 13, **dadurch gekennzeichnet, dass** in die Anpassung des Konditionierungsprozesses klimatische Vorhersagen einfließen, die in Ergänzung zu dem oder den außerhalb der Gärkammer (3) gewonnenen Werten in die Anpassung der Konditionierung einfließen.

15. Verfahren nach einem der Ansprüche 7 bis 14, **dadurch gekennzeichnet, dass** der erzeugte Luftstrom die Gärkammer (3) in vertikaler Richtung durchströmt.

## Claims

1. Leavening apparatus for the leavening of dough pieces (6), comprising a leavening chamber (3) for receiving dough pieces (6) to be leavened and with a climate control module (4) for controlling the climate in the leavening chamber (3) for the leavening process, to which climate control module (4) a control device (18) is assigned for the controlling of the leavening process as a dependency of the climatic data detected in the leavening chamber (3), said climate control module (4) comprises a device (15) for creating an air stream, and a device (15) for creating an aerosol on a water base to be entrained by the air stream, and said leavening chamber (3) has an upper inlet (8) for the climate control media of air and moisture provided by the climate control module (4), and a lower outlet (11), the opening width of which can be adjusted, by means of which inlet (8), during the operation of the leavening apparatus (1, 1.1) for the leavening of dough pieces (6), an air stream produced by the climate control module (4) is introduced into the leavening chamber (3), said air stream flowing out of the outlet (11) of the leavening chamber (3), and in said leavening chamber (3) are arranged in each case at least one temperature sensor, one moisture sensor, and one CO₂ sensor, said sensors (7) being configured for transmitting the detected climatic data to the control device (18).

2. Leavening apparatus according to claim 1, **characterised in that** in order to adjust the opening width of the outlet (11) an electrical actuator is provided, which can be actuated by the control device (18).

3. Leavening apparatus according to claim 1 or 2, **characterised in that** the climate control module (4) is a part of the leavening apparatus (1, 1.1) and is arranged above the leavening chamber (3).

4. Leavening apparatus according to any one of claims 1 to 3, **characterised in that** the climate control module (4) comprises a temperature control device (15) for controlling the temperature during the operation of the leavening apparatus (1, 1.1) and comprises an air stream introduced into the leavening chamber (3).

5. Leavening apparatus according to any one of claims 1 to 4, **characterised in that** the device (16) for producing the aerosol comprises means for producing an aerosol laden with at least one additive substance.

6. Leavening apparatus according to any one of claims 1 to 5, **characterised in that** an O₂ sensor is arranged in the leavening chamber (3), said sensor being configured for transmitting data to the control device (18).

7. Method for controlling the climate in the leavening chamber (3) of a leavening apparatus (1, 1.1) for the leavening of dough pieces (6) present in the leavening chamber (3), in particular for the operation of a leavening apparatus (1, 1.1) according to any one of claims 1 to 6, **characterised in that**
a) climatic data which exerts an influence on the leavening process is detected during the leavening process inside the leavening chamber, wherein, as climatic data, the conditioning values of temperature, absolute water content, and the CO₂ content are detected as ACTUAL values, and are compared with REFERENCE values provided in relation to the dough pieces which are to be leavened, and
b) in the event of a deviation being detected in an ACTUAL value from the REFERENCE value assigned to it, influence is exerted on the climate in the leavening chamber so as to adjust the ACTUAL value to the REFERENCE value, wherein, to impose the influence, an air stream is introduced via an upper inlet into the leavening chamber, and is conveyed through the leavening chamber, and
(i) an influence is exerted with regard to an adjustment of the ACTUAL temperature to the REFERENCE temperature by way of the quantity of air introduced and/or the temperature of the air stream being introduced,
(ii) an influence is exerted with regard to an adjustment of the absolute
ACTUAL water content to the absolute REFERENCE water content by a corresponding water aerosol loading of the air stream, and
(iii) an influence is exerted in relation to an adjustment of the CO₂ ACTUAL value to the REFERENCE value by a change in the volume flow of the air stream flowing through the leavening chamber.

8. Method according to claim 7, **characterised in that** the volume flow is adjusted by a change in the opening width of the outlet (11) of the leavening chamber (3).

9. Method according to claim 7 and 8, **characterised in that** the aerosol to be introduced with the air stream into the leavening chamber (3) is laden with at least one additional substance.

10. Method according to claim 9, **characterised in that** the additional substance is O₂ and/or ascorbic acid.

11. Method according to any one of claims 7 to 10, **characterised in that,** in addition, the air pressure prevailing inside the leavening chamber (3) is detected as an ACTUAL value, and an influence is exerted in relation to an adjustment of the ACTUAL pressure to the REFERENCE pressure by way of the air quantity introduced into the leavening chamber (3).

12. Method according to any one of claims 7 to (11), **characterised in that** climatic data exerting influence on the dough pieces (6) in the leavening chamber (3) is detected outside the leavening chamber (3), wherein the climatic data comprises at least the climatic values of temperature, absolute water content, and air pressure as ACTUAL outside values, and is compared with the respective REFERENCE values and the difference between the REFERENCE value and the ACTUAL value detected inside the leavening chamber (3), and that, in the event of a deviation between an ACTUAL outside value detected outside the leavening chamber (3) and the REFERENCE value, depending on the reaction delay, and whether and to what extent a change in the ACTUAL outside value leads to a change in the ACTUAL value inside the leavening chamber (3), the climate in the leavening chamber (3) is adjusted to the amount of the changed reference value.

13. Method according to claim 12, **characterised in that** the data detected outside the leavening chamber (3) is climatic data of the outside environment of the building in which the leavening chamber (3) is located.

14. Method according to claims 12 or 13, **characterised in that** climatic forecasts are introduced into the adjustment of the conditioning process, which are introduced into the adjustment of the conditioning as a supplement to the values acquired in or outside the leavening chamber (3).

15. Method according to any one of claims 7 to 14, **characterised in that** the air stream which is created flows through the leavening chamber (3) in a vertical direction.

## Revendications

1. Appareil de fermentation pour fermenter des pâtons (6), comprenant une chambre de fermentation (3) destinée à recevoir les pâtons (6) à fermenter et comprenant un module de climatisation (4) destiné à piloter le climat dans la chambre de fermentation (3) pendant le processus de fermentation, auquel module de climatisation (4) est adjoint une unité de commande (18) pour piloter le processus de fermentation en fonction des données climatiques relevées dans la chambre de fermentation (3), lequel module de climatisation (4) comprend un équipement (15) de génération d'un flux d'air ainsi qu'un équipement (15) pour générer un aérosol à base aqueuse entraîné par le flux d'air et laquelle chambre de fermentation (3) comporte une entrée (8) supérieure pour les médiums de climatisation air et humidité mis à disposition par le module de climatisation (4) et une sortie (11) inférieure réglable quant à la largeur de son ouverture, par laquelle entrée (8) un flux d'air généré par le module de climatisation (4) pénètre dans la chambre de fermentation (3) lors du fonctionnement de l'appareil de fermentation (1, 1.1) afin de fermenter des pâtons (6), lequel flux d'air s'écoule par la sortie (11) de la chambre de fermentation (3), et dans laquelle chambre de fermentation (3) est placé au moins un détecteur de température, au moins un détecteur d'humidité et au moins un détecteur de CO₂, lesquels détecteurs (7) étant équipés pour transmettre les données climatiques relevées à l'unité de commande (18).

2. Appareil de fermentation selon la revendication 1, **caractérisé en ce qu'il** est prévu, pour régler la largeur d'ouverture de la sortie (11), un actionneur électrique pilotable par l'unité de commande (18).

3. Appareil de fermentation selon la revendication 1 ou 2, **caractérisé en ce que** le module de climatisation (4) fait partie de l'appareil de fermentation (1, 1.1) et qu'il est placé sur le dessus de la chambre de fermentation (3).

4. Appareil de fermentation selon l'une des revendications 1 à 3, **caractérisé en ce que** le module de climatisation (4) présente un équipement de régulation thermique (15) pour tempérer le flux d'air généré lors du fonctionnement de l'appareil de fermentation (1, 1.1) et introduit dans la chambre de fermentation (3).

5. Appareil de fermentation selon l'une des revendications 1 à 4, **caractérisé en ce que** l'équipement (16) destiné à produire de l'aérosol comprend des moyens pour générer un aérosol chargé d'au moins un adjuvant.

6. Appareil de fermentation selon l'une des revendications 1 à 5, **caractérisé en ce qu'un** détecteur d'O₂ est placé dans la chambre de fermentation (3), lequel détecteur est équipé pour transmettre des données à l'unité de commande (18).

7. Procédé pour conditionner le climat dans la chambre de fermentation (3) d'un appareil de fermentation (1, 1.1) destiné à fermenter les pâtons (6) se trouvant dans la chambre de fermentation (3), en particulier pour le fonctionnement d'un appareil de fermentation (1, 1.1) selon l'une des revendications 1 à 6, **caractérisé en ce que**
a) les données climatiques influençant le processus de fermentation sont relevées pendant le processus de fermentation à l'intérieur de la chambre de fermentation, les données climatiques relevées étant les grandeurs de conditionnement température, taux d'humidité absolue et teneur en CO₂ sous la forme de valeurs réelles qui sont comparées à des valeurs de consigne prévues pour les pâtons à fermenter et
b) lorsqu'une divergence d'une valeur réelle est constatée par rapport à la valeur de consigne correspondante, une influence est exercée sur le climat dans la chambre de fermentation afin d'ajuster la valeur réelle à la valeur de consigne, l'influence étant exercée en introduisant par l'entrée supérieure, dans la chambre de fermentation, un flux d'air qui va traverser la chambre de fermentation et
(i) une influence étant exercée par rapport à l'ajustement de la température réelle à la température de consigne au moyen de la quantité d'air acheminée et/ou par la température du flux d'air acheminé.
(ii) une influence étant exercée par rapport à l'ajustement du taux d'humidité absolu réel au taux d'humidité absolu de consigne au moyen d'une charge correspondante d'aérosol aqueux dans le flux d'air et
(iii) une influence étant exercée par rapport à l'ajustement de la valeur du CO₂ réelle à la valeur de consigne au moyen d'une variation du flux volumique du flux d'air circulant dans la chambre de fermentation.

8. Procédé selon la revendication 7, **caractérisé en ce que** le flux volumique est réglé à travers la variation de la largeur d'ouverture de la sortie (11) de la chambre de fermentation (3).

9. Procédé selon la revendication 7 et 8, **caractérisé en ce que** l'aérosol à introduire avec le flux d'air dans la chambre de fermentation (3) est chargé d'au moins un adjuvant.

10. Procédé selon la revendication 9, **caractérisé en ce que** l'adjuvant est de l'O₂ et/ou de l'acide ascorbique.

11. Procédé selon l'une des revendications 7 à 10, **caractérisé en ce que,** en plus, la pression d'air qui s'instaure à l'intérieur de la chambre de fermentation (3) est relevée en tant que valeur réelle et qu'une influence est exercée visant un ajustement de la pression réelle à la pression de consigne au moyen de la quantité d'air introduite dans la chambre de fermentation (3).

12. Procédé selon l'une des revendications 7 à 11, **caractérisé en ce que** les données climatiques exerçant une influence sur les pâtons (5) dans la chambre de fermentation (3) sont relevées à l'extérieur de la chambre de fermentation (3), consistant à relever en tant que données climatiques au l'une des grandeurs climatiques : température, taux d'humidité absolu et pression atmosphérique en tant que valeurs extérieures réelles et à les comparer avec la valeur de consigne respective ainsi qu'avec la différence entre la valeur de consigne et la valeur réelle relevée à l'intérieur de la chambre de fermentation (3) et que, si l'on constate une divergence entre la valeur réelle extérieure relevée à l'extérieur de la chambre de fermentation (3) et la valeur de consigne en fonction de l'inertie de la réaction, on examine si et dans quelles proportions une variation de la valeur réelle extérieure entraîne une variation de la valeur réelle à l'intérieur de la chambre de fermentation (3), suite à quoi le climat dans la chambre de fermentation (3) sera ajusté au saut de la valeur de consigne qui varie.

13. Procédé selon la revendication 12, **caractérisé en ce que** les données relevées à l'extérieur de la chambre de fermentation (3) sont des données climatiques de l'environnement extérieur du bâtiment dans lequel se trouve la chambre de fermentation (3).

14. Procédé selon la revendication 12 ou 13, **caractérisé en ce que** des prévisions climatiques sont intégrées dans l'ajustement du processus de conditionnement, qui viennent compléter la ou les valeurs obtenues à l'extérieur de la chambre de fermentation (3) afin d'ajuster le conditionnement.

15. Procédé selon l'une des revendications 7 à 14, **caractérisé en ce que** le flux d'air généré traverse la chambre de fermentation (3) dans le sens vertical.
